## Europäisches Patentamt

## European Patent Office

## Office européen des brevets

(19)

(11) Numéro de publication: **0 154 577**

**B1**

(12)

# FASCICULE DE BREVET EUROPÉEN

(45) Date de publication du fascicule du brevet:
**21.09.88**

(51) Int. Cl.⁴: **E 04 H 12/16, E 04 B 1/19**

(21) Numéro de dépôt: **85400231.8**

(22) Date de dépôt: **13.02.85**

---

(54) Poutre treillis précontrainte à éléments en état de flambage.

---

(30) Priorité: **20.02.84 FR 8402525**

(43) Date de publication de la demande:
**11.09.85 Bulletin 85/37**

(45) Mention de la délivrance du brevet:
**21.09.88 Bulletin 88/38**

(84) Etats contractants désignés:
**DE GB IT**

(56) Documents cité:
**DE-A-2 025 704**
**DE-C-618 523**
**FR-A-1 377 291**
**GB-A-2 038 914**
**US-A-3 665 670**
**US-A-4 207 715**

(73) Titulaire: **SOCIETE EUROPEENNE DE PROPULSION (S.E.P.) Société Anonyme dite:, 24 Rue Salomon de Rothschild, F-92150 Suresnes (FR)**

(72) Inventeur: **Maistre, Michel Antoine, 19, rue d'Austerlitz, F-33200 Bordeaux (FR)**

(74) Mandataire: **Joly, Jean- Jacques, CABINET BEAU DE LOMENIE 55, rue d'Amsterdam, F-75008 Paris (FR)**

---

LIBER, STOCKHOLM 1988

## Description

La présente invention concerne une poutre treillis, et plus précisément une poutre du type formé par la répétition régulière le long de l'axe de la poutre de mailles élémentaires polyèdriques ayant chacune deux faces d'extrémité parallèles identiques en forme de polygones réguliers à n côtés qui constituent les faces communes avec les mailles voisines.

Les poutres treillis sont communément utilisées comme éléments de charpente pour la construction de bâtiments, d'ouvrages d'art et de matériels divers tels que grues, pylones, antennes, etc...

Elles sont de forme allongée et d'aspect fortement ajouré. Elles sont en général formées de l'assemblage d'éléments rigides de forme allongée (barres) constituant un réseau tridimensionnel stable (treillis).

Le treillis comporte parfois, outre les éléments rigides, des éléments souples (câbles) qui, en général, entretoisent les éléments rigides et participent ainsi à la rigidité de l'ensemble.

La qualité recherchée dans la conception et le dimensionnement d'une poutre treillis est en général le meilleur compromis entre les trois propriétés majeures: les charges limites supportables, les déformations acceptables et la masse. D'autres considérations interviennent fréquemment, notamment au niveau du prix, de la longévité, de la sécurité, etc...

Le choix d'une structure de poutre treillis et de ses dimensions dépend aussi fortement du domaine dans lequel elle doit être utilisée et des sollicitations qu'elle doit supporter non seulement en service normal mais également dans des conditions de service accidentelles ou exceptionnelles.

La poutre objet de l'invention est destinée spécialement, mais non exclusivement, à la construction de très grandes structures arachnéennes qui doivent constituer la charpente de gigantesques antennes, de collecteurs d'énergie solaire et d'autres dispositifs qu'on envisage d'ériger dans l'espace interplanétaire et specialement en orbite autour de la terre.

Les dimensions de ces constructions, connues sous le vocable de "grandes structures spatiales" se chiffrent couramment, selon les projets étudiés, en centaine, voire même en milliers de mètres.

La présente invention a pour but de fournir une poutre treillis convenant particulièrement à la réalisation de grandes structures spatiales.

Ce but est atteint au moyen d'une poutre treillis du type indiqué en tête de la description et comprenant:
- des barres rigides en état de flambage qui relient chaque sommet de la maille élémentaire à son centre et appliquent un état de précontrainte à la poutre;
- chaque maille étant délimitée latéralement par 2n faces triangulaires formées en reliant chaque sommet d'une face d'extrémité aux deux plus proches sommets de la face d'extrémité opposée;
- les arêtes de la maille élémentaire étant matérialisées par des éléments qui sont en permanence sollicités en traction, sous l'effet de la précontrainte exercée par les barres rigides en état de flambage.

On obtient de la sorte une poutre treillis précontrainte dans laquelle la géométrie de chaque maille élémentaire est définie par les éléments formant les arêtes, ces éléments étant maintenus en tension par les barres à l'état de flambage qui constituent en outre un dispositif fortement déformable servant à ajuster et à équilibrer les efforts sur les câbles.

L'application de la précontrainte au moyen de barres à l'état de flambage plutôt qu'avec des barres non déformées présente des avantages importants.

En effet, la mise en précontrainte d'une maille élémentaire à niveau souhaité est délicate à réaliser au moyen de barres non déformées. Il est d'abord nécessaire de disposer des barres aux propriétés identiques, ce qui impose des tolérances de fabrication étroites qui grèvent lourdement le coût de la poutre. Il est ensuite nécessaire de régler précisément la précontrainte lors de l'assemblage des éléments constitutifs de la poutre, ce qui soulève des difficultés considérables dans le cadre de l'application aux grandes structures spatiales.

Ces inconvénients sont évités et le réglage de la précontrainte grandement simplifié par l'utilisation de barres à l'état de flambage, puisqu'il est bien connu que l'effort supporté par une barre est alors pratiquement constant quel que soit le niveau de déformation. La fabrication des barres peut donc s'accomoder de tolérances beaucoup plus larges et le montage de la poutre en vue d'atteindre le niveau de précontrainte souhaité est bien moins délicat.

Les éléments qui matérialisent les arêtes de la maille élémentaire peuvent être non rigides puisqu'ils ne sont normalement sollicités qu'en traction. Il est donc possible d'utiliser des éléments souples ou articulés tels que des câbles ou des chaînes.

Les barres en état de flambage sont obtenues à partir d'éléments rectilignes pleins ou creux à section constante. De préférence, les barres sont tubulaires à section transversale circulaire.

La liaison de chaque barre avec les éléments tendus à un sommet de la maille est assimilable à un appui ponctuel ou à une articulation tous azimuths telle qu'une rotule, en sorte qu'en ce point l'orientation de la barre est indifférente à l'orientation des éléments tendus.

Par contre, la liaison de chaque barre avec les autres barres de la maille au centre de celle-ci est rigide en sorte que l'orientation relative des barres les unes par rapport aux autres au voisinage du point de concours est figée dans un état défini par la géométrie théorique de la maille.

La longueur de ces barres est un peu supérieure à la distance entre un sommet et le centre du polyèdre en sorte que l'assemblage tel que décrit n'est possible que moyennant l'incurvation des barres suivant un arc. Etant donné la nature et l'orientation de l'effort supporté par chaque barre (compression suivant un axe passant par les deux extrémités de la barre) cette déformation correspond à un flambage. La liaison rigide au centre assure le flambage simultané de toutes les barres

La poutre est conçue pour n'être sollicitée normalement qu'en compression pure ou en traction pure, ce qui n'exclut pas qu'elle puisse supporter également des efforts de flexion ou de torsion. L'application des efforts de compression ou de tension doit se faire le plus équitablement possible sur les n sommets des faces d'extrémité de la poutre et suivant une direction le plus parallèle possible à son axe.

A cet effet, la poutre est terminée à chacune de ses extrémités par un faisceau de n barres partant des n sommets de la dernière face d'extrémité de maille élémentaire et concourant en un point commun situé sur l'axe de la poutre.

La maille élémentaire polyédrique à faces latérales triangulaire a ses faces d'extrémité parallèles et identiques, mais décalées l'une par rapport à l'autre d'un angle $\pi/n$ autour de l'axe de la poutre.

Dans sa forme la plus simple, la maille élémentaire est octaédrique avec des faces d'extrémité triangulaires.

Le dimensionnement de la maille élémentaire et des éléments qui la constituent, "éléments tendus" et "barres", se fait en fonction des propriétés finales recherchées et compte tenu des propriétés des matériaux utilisés en suivant les lois de la résistance des matériaux et spécialement les règles régissant le flambage des poutres et des barres.

D'autres paticularités de la poutre treillis conforme à l'invention ressortiront à la lecture de la description d'exemples de réalisation, faite ci-après, à titre indicatif mais non limitatif. On se référera aux dessins annéxes sur lesquels:

- la figure 1 est une vue schématique d'un tronçon d'une poutre treillis selon l'invention à maille élémentaire octaédrique,
- la figure 2 est une vue schématique d'une pièce de raccordement au centre de la maille élémentaire de la poutre illustrée par la figure 1,
- la figure 3 est une vue schématique d'une pièce de raccordement à chaque sommet de la maille élémentaire de la poutre illustrée par la figure 1, et
- la figure 4 est une vue schématique d'un tronçon d'une poutre treillis selon l'invention à maille élémentaire décaédrique.

Les exemples qui vont suivre correspondent à diverses variantes d'un même problème. Il s'agit de dimensionner au plus juste en ce qui concerne la masse une poutre de 18,3 m de long devant pouvoir supporter au maximum une charge de compression axiale de 4445 N.

## 1er exemple

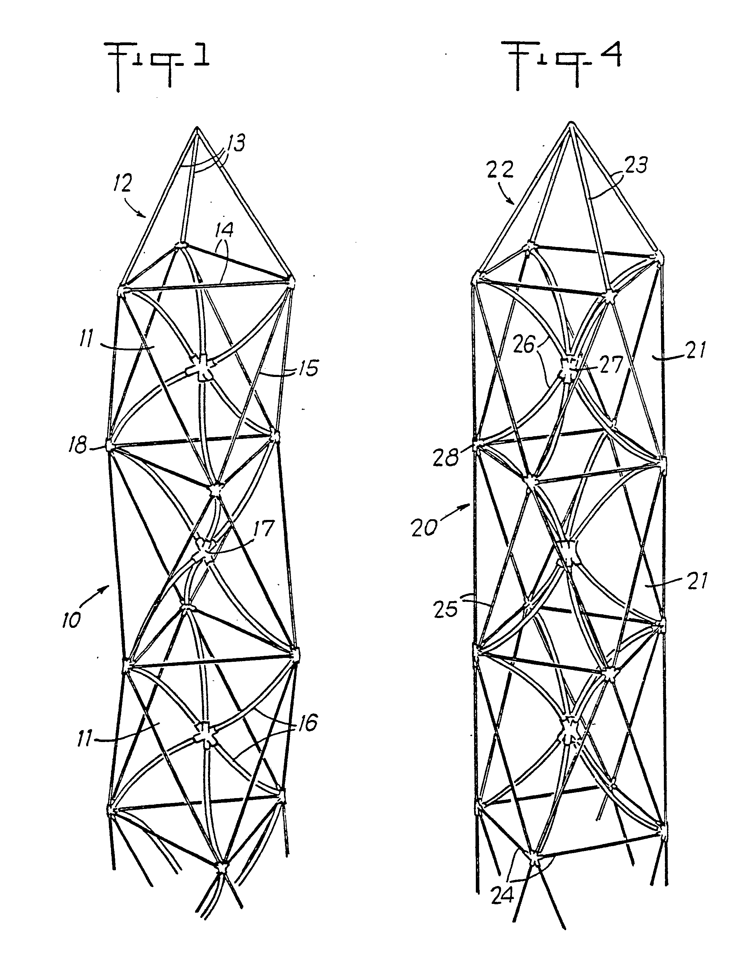

La poutre (10, figure 1) est fabriquée avec des "éléments tendus" de section circulaire en un matériau composite à base de fibres de carbone et de résine époxy ayant une masse volumétrique de 1500 kg par mètre cube et un module d'élasticité dans le sens longitudinal de 106 GPa et avec des barres en forme de tubes de section circulaire dont la paroi mesure 0,71 mm d'épaisseur et réalisés dans le même matériau que les éléments tendus. Cette poutre est formée de 31 mailles identiques (11) en forme d'octaèdre de 57,2 cm de haut et de deux faisceaux d'extrémités (12) constitués chacun par trois barres (13) d'une section identique à celles dont il va être question et d'une longueur telle que chaque faisceau a une hauteur de 28,4 cm.

Les mailles octaédriques (11) sont délimitées par deux faces d'extrémité triangulaires formées par 3 éléments tendus (14) de 28,8 cm de long et de 4,96 mm de diamètre, et par six arêtes latérales formées par des éléments tendus (15) de 59,9 mm de long et de 4,96 mm de diamètre. Comme le montre la figure 1, les faces d'extrémité d'une même maille sont en forme de deux triangles équilatéraux décalés l'un par rapport à l'autre d'un angle de $\pi/3$ autour de l'axe de la poutre (10).

L'ensemble de ces éléments disposés suivant les arêtes de l'octaèdre est mis en tension par un ensemble de six barres (16) interposées entre chacun des sommets de l'octaèdre et son point central. Ces barres creuses ont un diamètre extérieur de 9,36 mm et un diamètre intérieur de 7,94 mm.

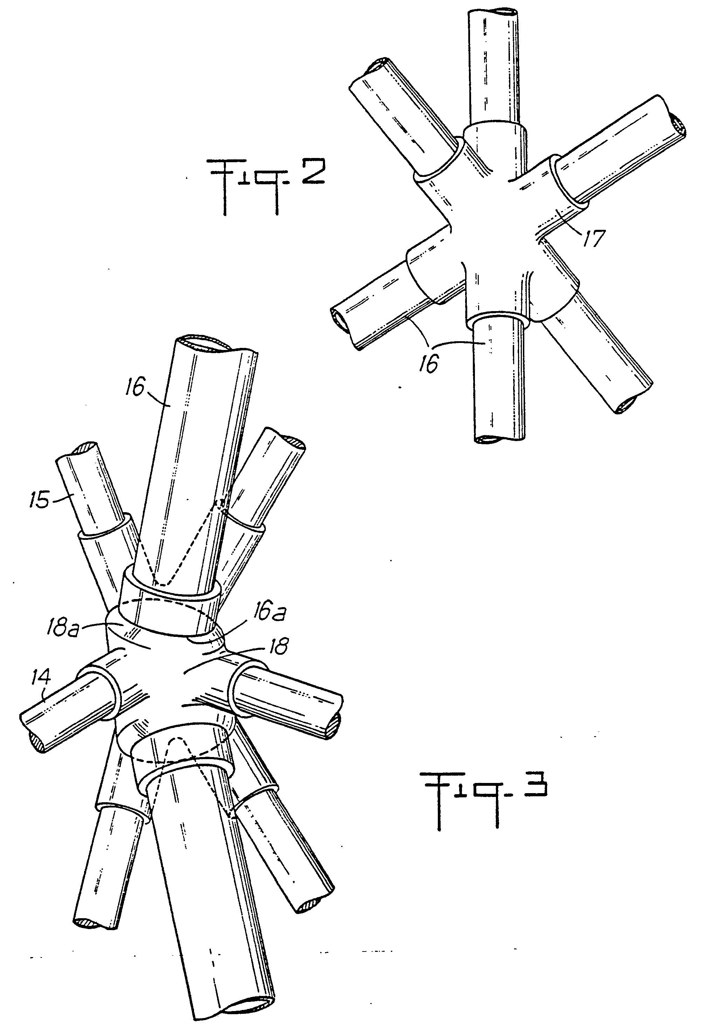

Au point central, la jonction rigide entre les six barres (16) est assurée par une pièce moulée (17, figure 2) en alliage d'aluminium ayant la forme d'un faisceau de six embouts tubulaires concourants d'un diamètre intérieur de 9,4 mm dans lesquels viennent s'encastrer les six barres. L'orientation de ces six embouts est définie par l'orientation des trois diagonales de la maille octaèdrique c'est-à-dire qu'elles font entre elles des angles de 51°19' et, par rapport à l'axe de symétrie de la maille, des angles de 30°.

Chaque sommet de l'octaèdre est commun à deux mailles contigües. C'est le point de rencontre de six éléments tendus et de deux barres. Le raccordement entre ces huit éléments est assuré par une pièce moulée (18, figure 3) en alliage d'aluminium ayant la forme d'un faisceau de six embouts tubulaires concourants d'un diamètre intérieur de 5,0 mm dans lesquels viennent s'emmancher avec collage les six éléments tendus.

Les orientations de ces six embouts sont définies par les orientations des arêtes de deux mailles contigües, c'est-à-dire qu'elles font des angles de 60° entre les deux arêtes de la face commune, de 27°48' entre deux arêtes latérales de la même maille et 76°06' entre arête latérale et arête de la face commune. Cette pièce présente en outre deux calottes sphériques convexes (18a) revêtues d'une couche de caoutchouc de 1 mm d'épaisseur sur lesquelles viennent prendre appui les extrémités des deux barres (16) qui sont munies à leur extrémité d'un embout (16a) en forme de calotte sphérique concave. Ces calottes sphériques ont pour centre commun le point de concours des six embouts qui coïncide avec le sommet de la maille.

La longueur des barres (16) est telle qu'elle est de 2 % supérieure à la longueur théorique disponible entre ce point d'appui et le fond de l'encastrement dans la pièce de raccordement centrale (17), soit, dans l'exemple présent 32,6 cm contre 32 cm théorique ce qui a pour effet que les barres (16) sont toutes, et de façon permanente, à l'état de flambage et exercent au niveau des sommets de la maille des efforts constants orientés de telle sorte qu'ils maintiennent l'ensemble des éléments (14, 15) disposés suivant les arêtes en tension et ceci même lorsque la poutre est soumise à un effort de compression entre ses pointes extrêmes jusqu'à la charge limite de 4445N. Sous cette charge, l'ensemble des éléments latéraux se trouvent complètement détendus et la poutre cède sans, pour autant, se rompre ou subir des dégâts irréversibles.

Cette poutre de 18,3 m de long capable de supporter un effort de compression jusqu'à 4445N entre ses deux points extrêmes ne pèse que 7,25 kg qui se décomposent en 4,10 kg d'éléments tendus, 1,85 kg de barres et 1,30 kg de pièces de raccordement. Sous la charge limite elle se raccourcit de 7,7 mm soit 42 %.

Cet ensemble de performances la situe favorablement par rapport à une poutre pour grande structure spatiale réalisée avec le même matériau suivant la technologie classique c'est-à-dire sous forme d'un tube cylindrique de 17,2 cm de diamètre et de 0,71 mm d'épaisseur terminé par des embouts coniques. Cette poutre de référence équipée de pièces d'extrémités coniques pèse 11,5 kg et ne se raccourcit que de 2 mm soit 0,011 % sous la charge limite.

### 2ème exemple

La poutre de cet exemple a les mêmes caractéristiques que celles du premier exemple à part le fait que les éléments tendus sont réalisés avec un matériau composite fait de fibres de carbone et de résine époxy dont le module d'élasticité longitudinal est égal à 212 GPa.

De ce fait, le diamètre de ces éléments peut être réduit à 3,5 mm et les pièces de raccordement peuvent être également allégées.

Cette poutre capable de supporter la même charge limite que la précédente ne pèse que 4,70 kg qui se décomposent en 2,05 kg d'éléments tendus, 1,85 kg de barres et 0,80 kg de pièces de raccordement.

Elle se raccourcit sous la charge limite de la même valeur que la précédente.

### 3ème exemple

La poutre de cet exemple est fabriquée avec des éléments tendus dont la masse volumique et le module d'élasticité longitudinal valent respectivement 1500 kg/m$^3$ et 212 GPa et avec des barres en forme de tubes dont la paroi mesure 0,355 mm d'épaisseur et qui sont réalisés avec un matériau dont la masse volumique et le module d'élasticité longitudinal valent respectivement 1500 kg/m$^3$ et 106 GPa.

Cette poutre est formée de 26 mailles octaédriques de 68,5 cm de haut et de deux faisceaux d'extrémités constitués chacun par trois barres d'une section identique à celle dont il va être question et d'une longueur telle que chaque faisceau a une hauteur de 24,5 cm.

Les mailles octaédriques sont délimitées par deux faces d'extrémités triangulaires formées par trois éléments tendus de 34,3 cm de long et de 2,95 mm de diamètre et par six arêtes latérales formées par des éléments tendus de 71,3 cm de long et de 2,95 mm de diamètre.

Les six barres ont un diamètre extérieur de 12,60 mm et un diamètre intérieur de 11,89 mm. Leur longueur de 38,8 mm est supérieure de 2 % à la longueur théorique, en sorte qu'elles sont en état de flambage.

Les pièces de raccordement sont identiques à celles des exemples précédents en ce qui concerne les angles mais les diamètres des embouts sont adaptés aux diamètres des éléments tendus et des barres du présent exemple et elles sont réalisées en alliage de magnésium au lieu d'aluminium.

Cette poutre de 18,3 m de long capable de supporter un effort de compression jusqu'à 4445N entre ses deux points extrêmes ne pèse que 3,35 kg qui se décomposent en 1,45 kg d'éléments tendus, 1,3 kg de barres et 0,6 kg de pièces de raccordement.

Elle se raccourcit de 10,8 mm sous la charge limite soit 0,059 %.

### 4ème exemple

La poutre (20, figure 4) de cet exemple est formée de mailles décaédriques (21). Les faces d'extrémités sont des carrés délimités par quatre éléments tendus "travers" (24). Ces faces sont reliées par huit éléments tendus "latéraux" (25) qui délimitent huit faces latérales triangulaires. Les faces d'extrémités d'une même maille étant décalées l'une par rapport à l'autre d'un angle de $\pi/4$ autour de l'axe de la poutre (20).

La poutre est formée de 18 mailles identiques de 96 cm de hauteur et est terminée à chaque extrémité par un faisceau (22) de quatre barres concourantes (23) d'une section identique à celles dont il va être question et d'une longueur telle que chaque faisceau a une hauteur de 51 cm.

Les éléments tendus (24, 25) constituant les arêtes des mailles décaédriques ont un diamètre de 3,06 mm. Les éléments "travers" (24) ont une longueur de 35,3 cm alors que les éléments "latéraux" (25) ont une longueur de 97,9 cm. Tous ces éléments tendus sont constitués d'un matériau composite à base de fibres de bore et d'une résine époxy dont la masse volumique et le module d'élasticité valent respectivement 1500 kg/m³ et 212 GPa.

L'ensemble de ces éléments disposés suivant les arêtes du décaèdre est mis en tension par un ensemble de huit barres (26) interposées entre chacun des sommets du décaèdre et son point central. Ces barres tubulaires ont un diamètre extérieur de 13,56 mm et un diamètre intérieur de 12,85 mm, elles sont constituées d'un matériau composite à base de fibres de bore et d'une résine époxy dont la masse volumique et le module d'élasticité valent respectivement 1500 kg/m³ et 106 GPa. La longueur de ces barres est égale à 53,0 cm soit 1 % de plus que la distance théorique de 52,5 cm existant entre le fond de l'encastrement dans la pièce de liaison centrale et le point d'appui sur la pièce de raccordement des éléments tendus au sommet du décaèdre.

Cette surlongueur est suffisante pour assurer le flambage des barres. De plus, la liaison rigide des huit barres au point central impose que ce flambage se produise simultanément sur les huit barres.

La pièce de raccordement centrale (27) est réalisée en alliage de magnésium et présente huit embouts tubulaires concourants d'un diamètre intérieur de 13,6 mm dans lesquels viennent s'encastrer les huit barres. L'orientation de ces huit embouts est définie par l'orientation des huit droites liant le point central du décaèdre à chacun de ses sommets. Chacun fait ainsi un angle de 27°31' par rapport à l'axe de symétrie de la pièce et des angles de 38°08' par rapport à ses deux plus proches voisins.

Chaque sommet du décaèdre est commun à deux mailles contigues. C'est le point de rencontre de six éléments tendus et de deux barres. Le raccordement entre ces huit éléments est assuré par une pièce moulée (28) en alliage de magnésium ayant la forme d'un faisceau de six embouts tubulaires concourants d'un diamètre intérieur de 3,1 mm dans lesquels viennent s'emmancher avec collage les six éléments tendus. Les orientations de ces six embouts sont définies par les orientations des arêtes des deux mailles contigues c'est-à-dire qu'elles font des angles de 90° entre les deux arêtes de la face commune, de 20°48' entre deux arêtes latérales de la même maille et 79°36' entre arêtes latérales et arêtes de la face commune. Les deux barres viennent prendre appui sur cette pièce sur des calottes sphériques comme décrit dans le premier exemple.

Cette poutre à mailles décaédriques de 18,3 m de long, capable de supporter un effort de compression jusqu'à 4445N entre ses deux points extrêmes ne pèse que 4,38 kg qui se décomposent en 1,95 kg d'éléments tendus, 1,83 kg de barres et 0,60 kg de pièces de raccordement. Sous la charge limite, elle se raccourcit de 6,8 mm soit 0,037 %.

Ces diverses versions d'une poutre de longueur donnée devant supporter à la limite une charge de compression donnée n'ont été présentées, à titre d'exemples, que pour illustrer la diversité des formes et des dimensions que peut prendre la poutre conforme à l'invention et dans quelle mesure cette poutre peut être plus légère qu'une poutre tubulaire classique ce qui est un avantage très précieux pour l'utilisation privilégiée envisagée en raison du coût du transport dans l'espace à partir de la terre.

Il va de soi que la poutre précontrainte objet de l'invention caractérisée par sa structure faite de la juxtaposition de mailles polyèdriques identiques délimitées par des éléments mis en tension par un ensemble de barres concourant au point central de chaque maille et par le fait que l'ensemble des barres est à l'état de flambage peut prendre d'autres formes et dimensions que celles décrites ici, être réalisées en d'autres matériaux et être affectée à d'autres usages.

On s'est attaché, dans les exemples traités à satisfaire essentiellement une exigence de tenue en compression car c'est en général la caractéristique la plus critique pour ce genre de poutre mais ceci n'exclut pas pour une telle poutre la possibilité de supporter des efforts d'autre nature tels que traction, torsion ou flexion.

L'application d'un effort de traction sur toute la longueur de la poutre suppose que les faisceaux d'extrémité soient eux mêmes capables de transmettre ces efforts au treillis formé par les éléments tendus. Il faut pour cela que les barres constituant ces faisceaux d'extrémités soient convenablement verrouillées sur les pièces de raccordement des éléments tendus où ils aboutissent, ce qui ne pose aucun problème.

La poutre peut ainsi être sollicitée en traction et elle est capable de supporter à la limite un effort de traction très supérieur à l'effort de compression limite. Ainsi, les poutres à mailles octaédriques des exemples 1, 2 et 3 sont capables de supporter à la limite un effort de traction de 13335N tandis que la poutre à mailles décaédriques de l'exemple 4 est capable de supporter à la limite un effort de traction de 25900N.

## Revendications

1. Poutre treillis formée par la répétition régulière le long de l'axe de la poutre de mailles élémentaires polyédriques ayant chacune deux faces d'extrémité parallèles identiques en forme de polygones réguliers à n côtés qui constituent les faces communes avec les mailles voisines, comprenant.

- des barres rigides (16, 26) en état de flambage qui relient chaque sommet de la maille élémentaire à son centre et appliquent un état de précontrainte à la poutre;

- chaque maille (11, 21) étant délimitée latéralement par 2n faces triangulaires formées en reliant chaque sommet d'une face d'extrémité aux deux plus proches sommets de la face d'extrémité opposée;

- les arêtes de la maille élémentaire étant matérialisées par des éléments (14, 15; 24, 25) qui sont en permanence sollicités en traction, sous l'effet de la précontrainte exercée par les barres rigides (16, 26) en état de flambage.

2. Poutre selon la revendication 1, caractérisée en ce que chaque barre à l'état de flambage a une extrémité reliée rigidement aux autres barres de la même maille élémentaire au centre de celle-ci et l'autre extrémité articulée à un sommet de la maille.

3. Poutre selon la revendication 2, caractérisée en ce que chaque sommet de maille élémentaire est matérialisé par une pièce de raccordement (18, 28) comprenant six logements pour les extrémités des éléments tendus (14, 15; 24, 25) concourant à ce sommet, et deux surfaces d'appui pour des surfaces d'extrémité des barres (16, 26) reliant le sommet aux centres des deux mailles élémentaires auxquelles ce sommet est commun.

4. Poutre selon la revendication 3, caractérisée en ce que lesdites surfaces d'appui (18a) et surfaces d'extrémité (16a) ont la forme de calottes sphériques.

5. Poutre selon l'une quelconque des revendications 1 à 4, caractérisée en ce qu'elle est terminée à chacune de ses extrémités par un faisceau (12, 22) de n barres (13, 23) partant des n sommets de la dernière face d'extrémité de maille élémentaire et concourant en un point situé sur l'axe de la poutre.

6. Poutre selon l'une quelconque des revendications 1 à 5, caractérisée en ce que les éléments qui matérialisent les arêtes de la maille élémentaire sont non rigides.

7. Poutre selon l'une quelconque des revendications 1 à 6, caractérisée en ce que les barres (16, 26) qui relient chaque sommet d'une maille élémentaire au centre de celle-ci sont des éléments tubulaires à section circulaire.

8. Poutre selon l'une quelconque des revendications 1 à 7, caractérisée en ce que les mailles élémentaires (11) sont octaédriques avec deux faces d'extrémité triangulaires décalées l'une par rapport à l'autre d'un angle de $\pi/3$ autour de l'axe de la poutre (10).

9. Poutre selon l'une quelconque des revendications 1 à 8, caractérisée en ce que les mailles élémentaires (21) sont décaédriques avec deux faces d'extrémité carrées décalées l'une par rapport à l'autre d'un angle de $\pi/4$ autour de l'axe de la poutre (20)

10. Utilisation d'une poutre selon l'une quelconque des revendications 1 à 9, pour la construction de grandes structures spatiales.

**Patentansprüche**

1. Fachwerkträger, gebildet durch die regelmäßige Wiederholung längs der Achse des Trägers von polyedrischen Bausteinen, die jeweils zwei identische, parallele Endseiten in Form regelmäßiger Vielecke mit n Seiten aufweisen, die die gemeinsamen Seiten mit den benachbarten Bausteinen bilden, aufweisend:

- starre Stäbe (16, 26) in Knickzustand, die jeden Scheitel des Bausteins in dessen Zentrum verbinden und den Träger in einen Vorspannungszustand versetzen;

- wobei jeder Baustein (11, 21) seitlich durch 2n dreieckige Seiten begrenzt ist, die jeden Scheitel einer Endseite mit den beiden nächsten Scheiteln der gegenüberliegenden Endseite verbinden;

- wobei die Kanten des Bausteins durch Elemente (14, 15; 24, 25) ausgeführt sind, die in Permanenz unter Wirkung der durch die starren Stäbe (16, 26) im Knickzustand ausgeübten Vorspannung zugbeansprucht sind.

2. Träger nach Anspruch 1, dadurch gekennzeichnet, daß jeder Stab im Knickzustand ein starr mit den anderen Stäben desselben Bausteins in dessen Zentrum verbundenes Ende und das andere Ende gelenkig an einem Scheitel des Bausteins angebracht aufweist.

3. Träger nach Anspruch 2, dadurch gekennzeichnet, daß jeder Bausteinscheitel durch ein Verbindungsteil (18, 28) ausgeführt ist, das sechs Aufnahmen für die Enden der zu diesem Scheitel verlaufenden Spannelemente (14, 15; 24, 25) und zwei Abstützflächen für die Endflächen der Stäbe (16, 26) aufweist, die den Scheitel mit den Zentren der beiden Bausteine verbinden, denen dieser Scheitel gemeinsam ist.

4. Träger nach Anspruch 3, dadurch gekennzeichnet, daß die Abstützflächen (18a) und Endflächen (16a) die Form von Kalotten aufweisen.

5. Träger nach einem beliebigen der Ansprüche 1 bis 4, dadurch gekennzeichnet, daß er an jedem seiner Enden durch ein Bündel (12, 22) von n Stäben (13, 23) abgeschlossen ist, die von den n Scheiteln der letzten Bausteinendseite ausgehen und in einem auf der Achse des Trägers gelegenen Punkt zusammenlaufen.

6. Träger nach einem beliebigen der Ansprüche 1 bis 5, dadurch gekennzeichnet, daß die Elemente nicht starr sind, die die Kanten des Bausteins verkörpern.

7. Träger nach einem beliebigen der Ansprüche 1 bis 6, dadurch gekennzeichnet, daß die Stäbe (16, 26), die jeden Scheitel eines Bausteins mit dessen Zentrum verbinden, Rohrelemente mit kreisförmigem Querschnitt sind.

8. Träger nach einem beliebigen der Ansprüche 1 bis 7, dadurch gekennzeichnet, daß die Bausteine (11) oktaedrisch sind, wobei zwei dreieckige Endseiten in bezug aufeinander in einem Winkel von π/3 um die Achse des Trägers (10) herum versetzt sind.

9. Träger nach einem beliebigen der Ansprüche 1 bis 8, dadurch gekennzeichnet, daß die Bausteine (21) dekaedrisch sind, wobei zwei viereckige Endseiten in bezug aufeinander um einen Winkel von π/4 um die Achse des Trägers (20) herum versetzt sind.

10. Verwendung eines Trägers nach einem beliebigen der Ansprüche 1 bis 9 für den Bau großer Raumstrukturen.

**Claims**

1. Truss-like beam formed by the regular repetition along the axis of the beam, of polyhedral elementary cells, each one having two parallel and identical end faces, shaped as regular polygons with n sides which constitute the faces shared with the adjacent cells, comprising:
- rigid bars (16, 26) in buckled condition which connect each apex of every elementary cell to its center, and apply a prestressing state to the beam,
- each cell (11, 21) being defined laterally by 2n triangular faces formed by joining the apex of one end face to the two closest apices of the opposite end face,
- the edges of the elementary cell being materialized by elements (14,15; 24,25) which are permanently undergoing tensile stresses, under the effect of the pre-stressing exerted by the rigid bars (16, 26) in buckled state.

2. Truss-like beam according to claim 1, characterized in that each buckled bar has one end connected rigidly to the other bars of same elementary cell, in the center thereof, whereas its other end is articulated on an apex of the cell.

3. Truss-like beam according to claim 2, characterized in that each apex of elementary cell is materialized by a connecting piece (18, 28) comprising six housings for receiving the ends of the tense elements (14,15 ; 24, 25) converging in that point, and two support surfaces for end surfaces of the bars (16, 26) joining the apex to the centers of two elementary cells having said apex in common.

4. Truss-like beam according to claim 3, characterized in that said support surfaces (18a) and end surfaces (16a) have the shape of spherical caps.

5. Truss-like beam according to claims 1 to 4, characterized in that said beam ends, at both its ends, into a bundle (12, 22) of n bars (13, 23) beginning at the n apices of the last end face of elementary cell and converging into a common point situated on the axis of the beam.

6. Truss-like beam according to any one of claims 1 to 5, characterized in that the elements materializing the edges of the elementary cell are not rigid.

7. Truss-like beam according to any one of claims 1 to 6, characterized in that the bars (16, 26) connecting every apex of an elementary cell to the center of the latter are tubular elements of circular cross-section.

8. Truss-like beam according to any one of claims 1 to 7, characterized in that the elementary cells (11) are octahedral with two triangular end faces, offset one with respect to the other by an angle of π/3 about the axis of the beam (10).

9. Truss-like beam according to any one of claims 1 to 8, characterized in that the elementary cells (21) are decahedral with two square end faces offset one with respect to the other by an angle of π/4 about the axis of the beam (20).

10. Use of a truss-like beam according to any one of claims 1 to 9, for the construction of large space structures.

Fig-1

Fig-4

0 154 577

Fig. 2

Fig. 3

3